# EUROPÄISCHE PATENTSCHRIFT

(11) **EP 2 067 743 B1**
(45) Veröffentlichungstag und Bekanntmachung des Hinweises auf die Patenterteilung: **10.07.2013**
(21) Anmeldenummer: 07122096.6
(22) Anmeldetag: 03.12.2007
(51) Int. Cl.: C01B 33/02, C09C 1/28

(54) **Verfahren zur Herstellung von oberflächenmodifizierten Silicium-Nanopartikel**
Process for preparation of surface modified silicon nanoparticles
Procédé de préparation de nanoparticule de silicium modifiée en surface

(43) Veröffentlichungstag der Anmeldung: 10.06.2009
(73) Patentinhaber: Evonik Degussa GmbH, 45128 Essen (DE); Friedrich-Alexander-Universität Erlangen-Nürnberg, 91054 Erlangen (DE)
(72) Erfinder: Ebbers, André, 44793, Bochum (DE); Kryschi, Carola, 91088, Bubenreuth (DE); Cimpean, Carla, 91056, Erlangen (DE); Kuntermann, Thilo Volker, 90768, Fürth (DE)

(56) Entgegenhaltungen:
- EP-A- 1 760 045
- US-A1- 2004 229 447
- ROGOZHINA, E.V. ET.AL.: "Carboxyl functionalization of ultrasmall luminescent silicon nanoparticles through thermal hydrosilylation" J. MATER. CHEM., Bd. 16, 2006, Seiten 1421-1430, XP002478812
- BURIAK ET AL: "Organometallic chemistry on silicon surfaces: formation of functional monolayers bound through Si-C bonds" JOURNAL OF THE CHEMICAL SOCIETY, CHEMICAL COMMUNICATIONS, CHEMICAL SOCIETY. LETCHWORTH, GB, Bd. 12, 1. Juni 1999 (1999-06-01), Seiten 1051-1060, XP002145037 ISSN: 0022-4936
- LI, Z.F. ET.AL.: "Luminescent Silicon Nanoparticles Capped by Conductive Polyaniline through the Self_Assembly Method" LANGMUIR, Bd. 20, 2004, Seiten 1963-1971, XP002478813

## Beschreibung

Die Erfindung betrifft ein Verfahren zur Herstellung oberflächenmodifizierte Siliciumpartikel, und deren Verwendung.

Die Oberflächenmodifizierung von Siliciumwafer-Oberflächen über die photochemische und thermisch induzierte Hydrosilylierung ist aktueller Stand der Technik (J. M. Buriak, Organometallic Chemistry an Silicon and Germanium Surfaces, Chem. Rev. 102 (2002) 1271-1308; J. M. Buriak, M. J. Allen, Lewis Acid Mediated Functionalization of Porous Silicon with Substituted Alkenes and Alkynes, J. Am. Chem. Soc. 120 (1998) 1339-1340). Bedauerlicherweise sind diese nasschemischen Verfahren nicht direkt für Silicium-Nanopartikel anwendbar, da diese vergleichsweise verhältnismäßig größere Oberflächen haben und im hohen Maß zur Aggregation neigen. Die Aggregation erschwert nicht nur das Entfernen der natürlichen Passivierungsschicht aus amorphen SiOₓ mit Flußsäure, sondern macht auch die vollständige Oberflächenbedeckung mit funktionellen Gruppen unmöglich.

Rogozhina et al. (J. Mater. Chem. 16 (2006) 1421-1430) funktionalisierten Silicium-Nanopartikel mit Methyl-4-Pentenoat durch thermische Hydrosilylierung von H-terminierten Silicium-Nanopartikeloberflächen. Ein Nachweis für eine kovalente, stabile Si-C-Ankopplung des ungesättigten Esters konnte jedoch nicht erbracht werden. Vielmehr lässt das FTIR-Spektrum Si-O-Streckschwingungsbanden bei 1000 - 1100 cm⁻¹ erkennen, die eindeutig auf das Vorliegen von zumindest partiell existierender SiOₓ-Oberflächenschicht hinweist.

Hua et al. (Langmuir 21 (2005) 6054-6062) stellten unterschiedlich funktionalisierte Siliciumpartikel durch photochemische Hydrosilylierung von HF-geätzten Siliciumpartikel-Oberflächen mit 1-Penten, 1-Hexen, 1-Octen, 1-Dodecen, 1-Octadecen, 5-Hexen-1-ol, 1-Undecanol, Ethylundecylenat, Styrol und Vinylacetat her. Siliciumpartikel mit einer Exzitonen-Photolumineszenz im sichtbaren Spektralbereich, also von grün über gelb bis rot, wurden durch Ätzen mit einer Mischung aus Flußsäure (48 Gew.-%) und Salpetersäure (69 Gew.-%) erhalten. Der Durchmesser der Siliciumpartikel und damit der Spektralbereich der Photolumineszenz wird über die Ätzzeit eingestellt, wobei Durchmesser zwischen 5 und 10 nm erhalten werden. Da die Oberflächen mit einer Mischung aus Flußsäure und Salpetersäure behandelt werden, bleiben die H-terminierten Siliciumpartikel auch wieder oxidiert, was deutlich aus der Intensität der Si-O-Streckschwingungsbande im FTIR-Spektrum hervorgeht. Außerdem werden blau lumineszierende Siliciumpartikel durch Oxidation von grün lumineszierenden, Ethylbenzolfunktionalisierten Siliciumpartikeln erhalten, indem letztere im UV bei 254 nm bestrahlt werden. Die blaue Lumineszenz kann in jedem Fall Defektstrukturen der Passivierungsschicht zugeschrieben werden, da UV-Bestrahlung bei 254 nm UV die Si-C-Bindung spaltet, so dass anschließend die oxidische Passivierungsschicht wieder gebildet wird.

Lumineszierende Siliciumpartikel stehen im Brennpunkt von Forschungsaktivitäten, die auf die Entwicklung von Leuchtdioden und technischen Anwendungen in der Nano-und Mikrophotonik ausgerichtet sind. Außerdem werden geeignete Verfahren für die Herstellung von funktionalisierten Siliciumpartikel entwickelt, damit diese als Biomarker in lebendem Organismus eingesetzt werden können.

Trotz dieser Bedeutung ist es aber bisher nicht gelungen Siliciumpartikel so zu modifizieren, dass stabile, gut dispergierbare Partikel mit einer hohen, justierbaren Lumineszenzausbeute resultieren.

Die Aufgabe der vorliegenden Erfindung besteht daher darin, solche Partikel bereitzustellen. Eine weitere Aufgabe der Erfindung besteht darin, ein Verfahren zur Herstellung dieser Partikel bereitzustellen.

Gegenstand der Erfindung ist ein Verfahren zur Herstellung oberflächenmodifizierter Siliciumpartikel mit einem mittleren Partikeldurchmesser von 1 bis 20 nm, bei denen die Oberflächenmodifzierung
a) die Oberfläche der Siliciumpartikel vollständig umhüllt und
b) die aus einem oder mehreren Molekülteilen bestehen, die über eine Si-C-Bindung kovalent an das Silicium gebunden ist, und die Struktur

   -C¹HR-C²HR-(CR₂)ₙ-X (I)

   oder

   -C¹H=CH- (CR₂)ₙ-X (II)

   aufweisen, wobei
c) C¹ das Kohlenstoffatom darstellt, welches die kovalente Si-C-Bindung bildet,
d) X ein Molekülrest mit einem delokalisierten π-Elektronensystem ist,
e) R ein an C¹ oder C² gebundener Rest R ist, mit R = H, CH₃, C₂H₅, n-C₃H₇, i-C₃H₇, n-C₄H₉, i-C₄H₉ ist, wobei R für C¹ und C² gleich oder verschieden sein können,
f) n = 0-6 ist,
welches dadurch gekennzeichnet ist, dass man
- in einem nicht oxidierenden Medium zunächst
mit einer Siliciumdioxidschicht teilweise oder vollständig umhüllte Siliciumpartikel mit einer 5 volumenprozentigen HF-H₂O/Ethanol-Lösung über einen Zeitraum von 10 Minuten behandelt, und nachfolgend die flüssige Phase von dem erhaltenen, von Siliciumdioxid befreiten Siliciumpartikeln destillativ abtrennt,
- mit einer oder mehreren Verbindungen der
allgemeinen Formel CHR=CR-(CR₂)ₙ-X (III) oder CH≡C-(CR₂)ₙ-X (IV) umsetzt.

Der mittlere Partikeldurchmesser der erfindungsgemäß hergestellten oberflächenmodifizierten Siliciumpartikel beträgt 1 bis 20 nm. Vorzugsweise ist der Partikeldurchmesser eines einzelnen Partikels nicht größer als 10 nm. Die oberflächenmodifizierten Siliciumpartikel können auch monodispers oder weitestgehend monodispers vorliegen, das heißt alle Partikel weisen dieselbe Größe auf.

Die erfindungsgemäß hergestellten oberflächenmodifizierten Siliciumpartikel liegen bevorzugt als Einzelpartikel vor. Darunter ist zu verstehen, dass die Partikel nicht oder nur zu einem geringen Teil in einer aggregierten Form vorliegen sollen, in der fest aneinandergebundene, nicht oberflächenmodifizierte Siliciumpartikel mit einer oberflächenmodifizierten Hülle umgeben sind. Dagegen können die erfindungsgemäßen oberflächenmodifizierten Siliciumpartikel in agglomerierter Form vorliegen. Unter Agglomeraten sind im wesentlichen durch van der Waals Wechselwirkung zusammengehaltene Einzelpartikel zu verstehen, die durch Einwirkung geringer Dispergierenergien wieder getrennt werden können.

Ein weiteres wesentliches Merkmal der erfindungsgemäß hergestellten, oberflächenmodifizierten Siliciumpartikel ist deren vollständige Umhüllung mit dem oberflächenmodifizierenden Stoff. Dabei ist "vollständig" so zu verstehen, dass mittels Fourier-Transform-Infrarot-Spektroskopie (FTIR) keine Si-O-Schwingungsbanden nachweisbar sind. Die Methode liefert eine Bestimmungsgenauigkeit von 0,5 %, das heißt der Anteil an oxidierter Oberfläche ist kleiner als 1 %.

Die erfindungsgemäß hergestellten, oberflächenmodifizierten Siliciumpartikel enthalten einen Molekülteil, der über eine Si-C-Bindung kovalent an das Silicium gebunden ist. Die Si-C-Bindung kann ebenfalls mittels FTIR detektiert und damit nachgewiesen werden.

Die Oberflächenmodifizierung besteht aus einem oder mehreren Molekülteilen mit der Struktur -C¹HR-C²HR-(CR₂)ₙ-X (I) oder -C¹H=CH-(CR₂)ₙ-X (II).

Bevorzugt können Molekülteile sein, bei denen R = H ist.

Weiterhin können Molekülteile bevorzugt sein, bei denen n=0 ist.

X kann bevorzugt ein unsubstituierter oder substituierter cyclischer, aromatischer Rest sein. Er kann 5-7 Ringatome aufweisen oder auch ein kondensiertes Ringsystem darstellen, bei dem ein Ring 5 bis 7 Atome aufweist.

Vorzugsweise enthält wenigstens ein Ringsystem ein oder mehrere Heteroatome, ausgewählt aus der Gruppe umfassend N, O, S, P, wobei N besonders bevorzugt ist.

Die Anbindung von X an -(CR₂)ₙ-C²HR-C¹HR- (I) oder - (CR₂) ₙ-CH=C¹H- kann über ein Kohlenstoffatom an beliebiger Stelle des Ringsystemes erfolgen. Weist X ein oder mehrere Heteroatome auf so kann die Bindung bevorzugt über ein Kohlenstoffatom ortho-ständig zu einem Heteroatom erfolgen. Beispiele geeigneter Reste X können beispielsweise sein:

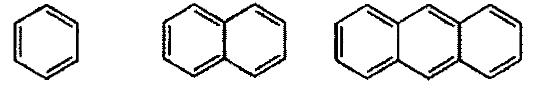

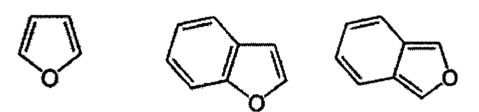

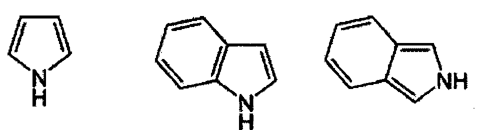

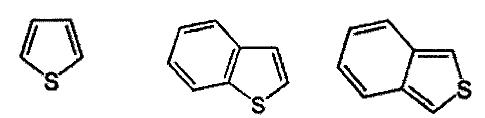

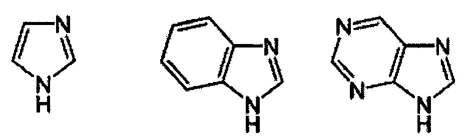

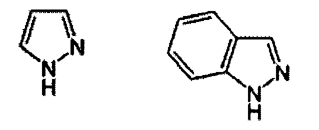

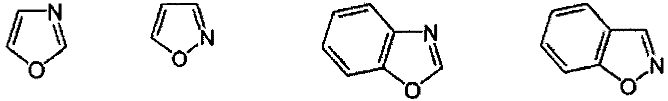

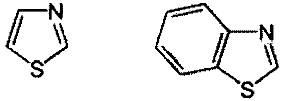

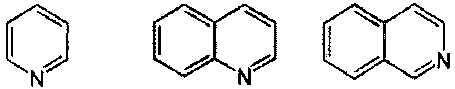

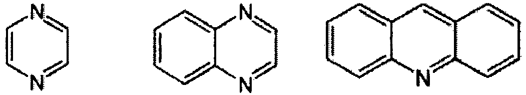

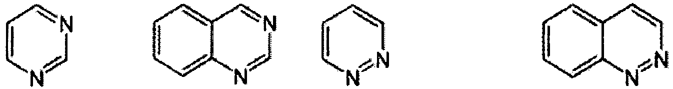

Bevorzugt können insbesondere erfindungsgemäß hergestellte oberflächenmodifizierte Siliciumpartikel sein, bei denen die Struktur der Oberflächenmodifizierung der der allgemeinen Formel (II) entspricht.

Ein weiterer Gegenstand der Erfindung ist ein Verfahren zur Herstellung der erfindungsgemäßen,
oberflächenmodifizierten Siliciumpartikel bei dem man in einem nicht oxidierenden Medium zunächst mit einer Siliciumdioxidschicht teilweise oder vollständig umhüllte Siliciumpartikel mit einer 1 bis 10 gewichtsprozentigen Flußsäure-Lösung ca. 1 bis 30 min behandelt, und nachfolgend die Flußsäure-Lösung von dem erhaltenen, von Siliciumdioxid befreiten Siliciumpartikeln abtrennt, mit einer oder mehreren Verbindungen der allgemeinen Formel (III) oder (IV)

CHR=CR-(CR₂)ₙ-X (III)

CH≡C-(CR₂)ₙ-X (IV)

umsetzt.

Dabei wird die Flußsäure vorzugsweise im molaren Verhältnis zwischen 0,5 und 0,8 eingesetzt. In der Regel ist 0,3 ≤HF/Si≤1, in mol/mol.

Auch die Verbindung der allgemeinen Formel (III) oder (IV) wird vorzugsweise im Überschuss eingesetzt. In der Regel ist 1 ≤[(II) oder (IV)]/Si ≤ 10, in mol/mol.

Die Umsetzung der von Siliciumdioxid befreiten Siliciumpartikel mit einer Verbindung der allgemeinen Formel (III) oder (IV) kann thermisch, radikalisch induziert, photochemisch induziert oder durch Metalle induziert, durchgeführt werden. Bevorzugt kann die Umsetzung bei einer Temperatur von 140 bis 200°C, besonders bevorzugt 150 bis 180°C, durchgeführt werden.

Die Umsetzung der von Siliciumdioxid befreiten Siliciumpartikel mit einer Verbindung der allgemeinen Formel (III) oder (IV) kann in einem Lösungsmittel durchführt werden. Unter einem Lösungsmittel ist eines zu verstehen, welches die Verbindungen der allgemeinen Formel (III) oder (IV) lösen kann. Geeignete Lösungsmittel können Acetophenon, Decalin, Toluol, Xylol, Mesitylen, Essigsäurecyclohexylester, 2-Ethyltoluol, 3-Ethyltoluol, 4-Ethyltoluol, 2-Furylmethanal, n-Propylbenzol, 1,2,3-Trimethylbenzol, 1,2,4-Trimethylbenzol, 1,2,5-Trimethylbenzol und deren Gemische sein. Bevorzugt können aromatische Kohlenwasserstoffe, wie Xylol oder Mesitylen, eingesetzt werden.

Bevorzugt können Verbindung der allgemeinen Formel (IV) eingesetzt werden. 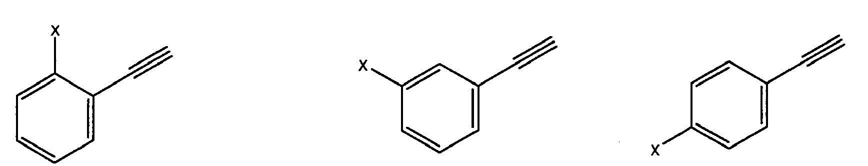 X= CH₃, CF₃, NH₂, X = CH₃, CF₃, NH₂, X=CH₃, CF₃, NH₂, NO₂, CHO, Phenyl, NO₂, OCH₃ NO₂, CHO, C₂H₅ Naphthyl 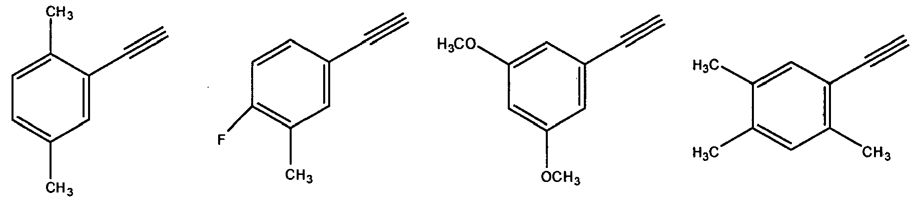 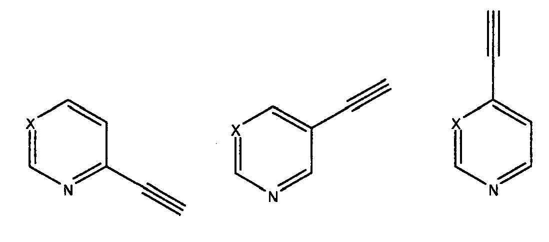 X = C oder N 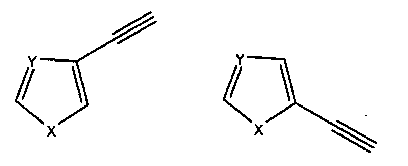 X = N, O oder S;
Y = N oder C

Besonders bevorzugt können Verbindungen mit den Strukturen 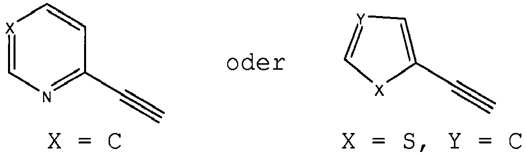 eingesetzt werden.

Ein weiterer Gegenstand der Erfindung ist eine Dispersion, welche die erfindungsgemäßen Siliciumpartikel enthält.

Der Gehalt an Siliciumpartikeln in der Dispersion kann bevorzugt 1 bis 30 Gew.-% betragen. Die flüssige Phase kann wässerig oder organisch sein.

Die Dispersion kann hergestellt werden, indem man die Siliciumpartikel unter dispergierenden Bedingungen auf einmal, portionsweise oder kontinuierlich in die flüssige Phase gibt. Geeignete Dispergieraggregate können beispielsweise Rüttelplatten und Ultraschallaggregate oder Kombinationen der vorgenannten Aggregate sein.

Ein weiterer Gegenstand der Erfindung ist die Verwendung der erfindungsgemäß hergestellten, oberflächenodifizierten Siliciumpartikel in Leuchtdioden, in Displays, in FET und als Biomarker.

Die Anwendungsmöglichkeiten der lumineszierenden Siliciumpartikel sind in der Optoelektronik und Photonik sowie und in den Lebenswissenschaften angesiedelt. Siliciumpartikel mit einer Quantenausbeute von 30% oder mehr eignen sich nicht nur für die Entwicklung von leistungsfähigen Leuchtdioden und Displaytechnologien, sondern sind auch als Biomarker und als Vehikel für wasserunlösliche Wirkstoffe (drug delivery systems) im lebenden Organismus einsatzfähig. Der Spektralbereich der Lumineszenz kann über den Si-C-gebundenen Chromophor eingestellt werden, so dass beispielsweise mehrfarbige Leuchtdioden oder auch vielfarbige Displays hergestellt werden können. Für technische Anwendungen im Bereich der Medizin und Pharmakologie können Chromophoren mit spezifischen funktionellen Gruppen kovalent an die Silicium-Oberfläche gebunden werden, so dass damit Wechselwirkungen mit Proteinen, Organellen oder der DNA erreicht werden. Derartig funktionalisierte Siliciumquantenpunkte können zum Markieren von Proteinen oder der DNA oder einfach zum fluoreszenzmikroskopischen Abbilden von krankem Gewebe eingesetzt werden. Eine spezielle Anwendung in der Pharmakologie ist die fluoreszenzspektroskopische Untersuchung von Transporterfunktionen Membranständiger Proteine in Tumorzellen.

Die vorliegende Erfindung erlaubt die vollständige Bedeckung von Siliciumpartikeln via kovalente Si-C-Bindungen mit Chromophoren, die resonant oder zumindest quasi-resonant über ihr π-Elektronensystem an die exzitonischen Zustände des Siliciumpartikels ankoppeln. Aus der vollständigen Oberflächenbedeckung mit kovalent gebundenen Chromophoren ergeben sich folgende Eigenschaften:
- SiOₓ-freie Oberflächen,
- von den Chromophoren gesteuerte
   Lumineszenzeigenschaften,
- von den Chromophoren vermittelte
   Ladungsträgerübertragung und
- erhöhte Dispergierbarkeit in verschiedenen Lösungsmitteln, die stabile kolloidale Dispersionen ermöglicht.

### Beispiel:

Alle Reaktionsschritte werden unter FormiergasAtmosphäre durchgeführt.
Bei den eingesetzten Siliciumpartikeln handelt es sich um nicht aggregierte Partikel mit einer BET-Oberfläche von 550 m²/g.
1 g Siliciumpartikel mit einem mittleren Partikeldurchmesser von ca. 5 nm werden mit 10 ml HF-H₂O/Ethanol-Lösung (5 Vol.-%) über einen Zeitraum von 10 Minuten behandelt. Anschließend wird die flüssige Phase destillativ abgetrennt. Zum verbleibenden Rückstand wird eine Lösung von 5 g 2-Ethinylpyridin in 70 ml Xylol gegeben und das Reaktionsgemisch über einen Zeitraum von 20 Stunden bei einer Temperatur von ca. 150°C behandelt. Nachfolgend wird von der flüssigen Phase durch Zentrifugation abgetrennt und mehrfach mit Wasser und Ethanol gewaschen und nachfolgend getrocknet.

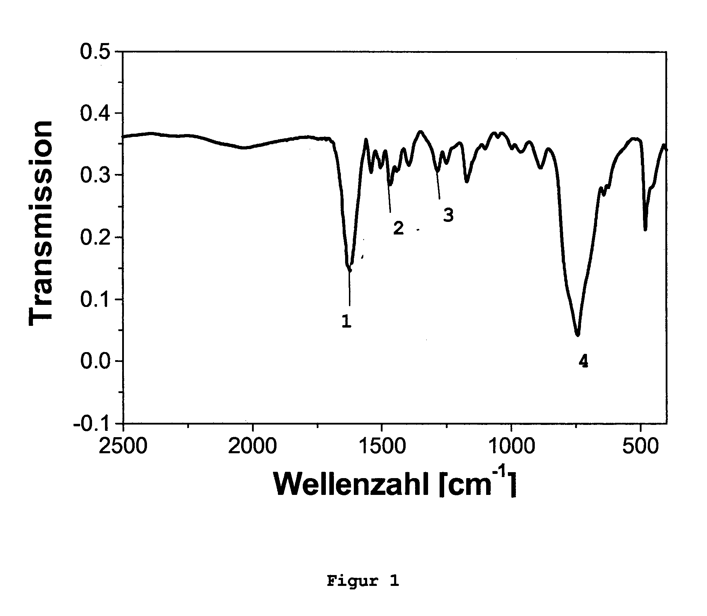

Figur 1 zeigt das FTIR-Spektrum der erfindungsgemäßen Partikel aus Beispiel 1, mit ν(C=C): 1620 cm⁻¹ (1), ν(C-N): 1469 cm⁻¹ (2), ν(Si-C): 1284 cm⁻¹ (3) und ν(C-Si): 741 cm⁻¹. Das FTIR-Spektrum zeigt keine Si-O-Streckschwingungsbande (1000 - 1100 cm⁻¹), die als eindeutiger Nachweis für die oxidische Passivierungsschicht eines Siliciumpartikels gilt. Anstelle dieser Schwingungsbande erscheint die Si-C-Biegeschwingungsbande bei ca. 740 cm⁻¹. Die das Vinyl-Pyridin identifizierenden Schwingungsbanden sind ebenfalls im Spektren vorhanden.

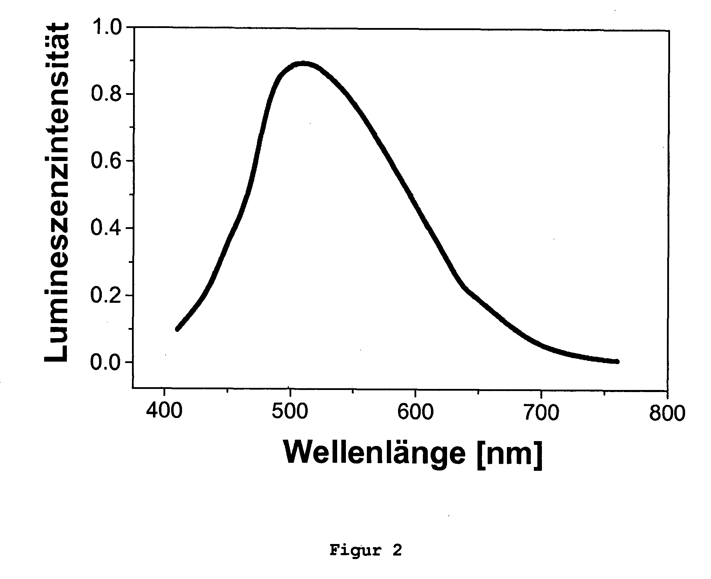

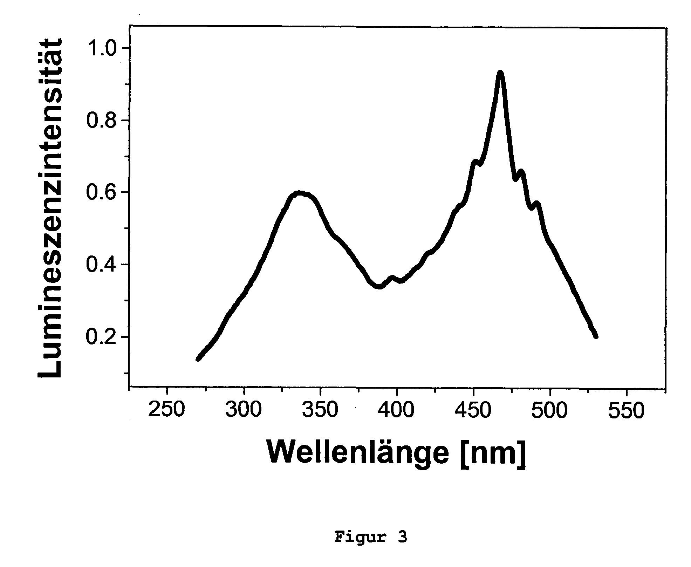

Die Figur 2 zeigt das Lumineszenzanregungsspektrum (Anregung bei 390 nm) und und Figur 3 das Lumineszenzspektrum (Detektion bei 550 nm) der erfindungsgemäßen Siliciumpartikel aus Beispiel 1. Das Vinyl-Pyridin bewirkt eine Verschiebung der Lumineszenz in den grünen Spektralbereich. Die Quantenausbeute dieser bei 390 nm angeregten Lumineszenz wird im Vergleich zum Fluoreszenzstandard Rhodamin 6G in Ethanol mit jeweils vergleichbaren Konzentrationen bestimmt. Die derart ermittelte Lumineszenzquantenausbeute der erfindungsgemäßen Siliciumpartikel aus Beispiel 1 beträgt 30 %.

Das Lumineszenzanregungsspektrum der erfindungsgemäßen Siliciumpartikel aus Beispiel 1 enthält zwei Anregungsbanden. Die bei 340 nm auftretende Bande wird dem Silicium-Festkörper zugeordnet, während die Bande bei 467 nm aufgrund seiner Schwingungsstruktur eindeutig dem Vinyl-Pyridin-Chromophor zugeschrieben werden kann. Damit kann die grüne Lumineszenz der erfindungsgemäßen Siliciumpartikel aus Beispiel 1 offensichtlich über den Silicium-Festkörper als auch über den Chromophor angeregt werden, was die resonante Wechselwirkung zwischen Chromophor und Siliciumpartikel belegt. Die Kopplung zwischen den π-Elektronenzuständen und den Exzitonzuständen des Siliciums bestimmt die Quantenausbeute und das Spektrum der Lumineszenz der Siliciumpartikel.

Das erfindungsgemäße Verfahren ermöglicht die vollständige Umhüllung der Oberfläche der Siliciumpartikel, die über eine Si-C-Bindung kovalent und damit chemisch stabil an oberflächenständige Siliciumatome gebunden sind.

## Patentansprüche

1. Verfahren zur Herstellung oberflächenmodifizierter Siliciumpartikel
mit einem mittleren Partikeldurchmesser von 1 bis 20 nm, bei denen die Oberflächenmodifzierung
a) die Oberfläche der Siliciumpartikel vollständig umhüllt und
b) die aus einem oder mehreren Molekülteilen bestehen, die über eine Si-C-Bindung kovalent an das Silicium gebunden ist, und die Struktur
-C¹HR-C²HR-(CR₂)ₙ-X (I)
oder
-C¹H=CH- (CR²)ₙ-X (II)
aufweisen, wobei
c) C¹ das Kohlenstoffatom darstellt, welches die kovalente Si-C-Bindung bildet,
d) X ein Molekülrest mit einem delokalisierten π-Elektronensystem ist,
e) R ein an C¹ oder C² gebundener Rest R ist, mit R = H, CH₃, C₂H₅, n-C₃H₇, i-C₃H₇, n-C₄H₉, i-C₄H₉ ist, wobei R für C¹ und C² gleich oder verschieden sein können,
f) n = 0-6 ist,
**dadurch gekennzeichnet, dass** man
· in einem nicht oxidierenden Medium zunächst mit einer Siliciumdioxidschicht teilweise oder vollständig umhüllte Siliciumpartikel mit einer 5 volumenprozentigen HF-H₂O/Ethanol-Lösung über einen Zeitraum von 10 Minuten behandelt, und nachfolgend die flüssige Phase von dem erhaltenen, von Siliciumdioxid befreiten Siliciumpartikeln destillativ abtrennt,
· mit einer oder mehreren Verbindungen der allgemeinen Formel CHR=CR-(CR₂)ₙ-X (III) oder CH≡C-(CR₂)ₙ-X (IV) umsetzt.

2. Verfahren nach Anspruch 1,
**dadurch gekennzeichnet, dass** 0,3 ≤ HF/Si ≤ 1, in mol/mol, ist.

3. Verfahren nach den Ansprüchen 2 oder 3,
**dadurch gekennzeichnet, dass** 1 ≤ [(III) oder (IV)]/Si ≤ 10, in mol/mol, ist.

4. Verfahren nach den Ansprüchen 1 bis 3,
**dadurch gekennzeichnet, dass** man die Umsetzung der von Siliciumdioxid befreiten Siliciumpartikel mit einer Verbindung der allgemeinen Formel (III) oder (IV) bei Temperaturen von 140 bis 200°C durchführt.

5. Verfahren nach den Ansprüchen 1 bis 4,
**dadurch gekennzeichnet, dass** man die Umsetzung der von Siliciumdioxid befreiten Siliciumpartikel mit einer Verbindung der allgemeinen Formel (III) oder (IV) in einem Lösungsmittel durchführt.

6. Verfahren nach den Ansprüchen 1 bis 5,
**dadurch gekennzeichnet, dass** die Verbindung der allgemeinen Formel (IV) 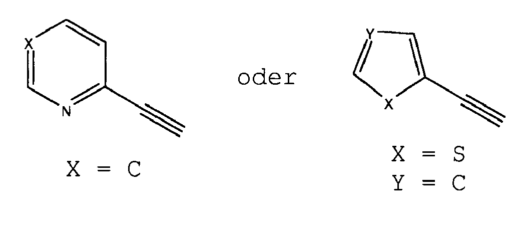 ist.

7. Dispersion enthaltend die gemäß der Ansprüche 1 bis 6 erhaltenen Siliciumpartikel.

8. Verwendung der gemäß der Ansprüche 1 bis 6 erhaltenen Siliciumpartikel oder der Dispersion gemäß Anspruch 7 in Leuchtdioden, in Displays, in FET, als Vehikel für den intrazellulären Transport von Wirkstoffen und als Biomarker.

## Claims

1. Process for preparation of surface-modified silicon particles having an average particle diameter of 1 to 20 nm, in which the surface modification
a) completely envelops the surface of the silicon particles and
b) consists of one or more molecular moieties bonded covalently to the silicon via an Si-C bond and having the structure
-C¹HR-C²HR- (CR²)ₙ-X (I)
or
-C¹H=CH- (CR²)ₙ-X (II),
where
c) C¹ represents the carbon atom which forms the covalent Si-C bond,
d) X is a molecule residue having a delocalized π-electron system,
e) R is a radical R bonded to C¹ or C², where R = H, CH₃, C₂H₅, n-C₃H₇, iso-C₃H₇, n-C₄H₉ or iso-C₄H₉, and R may be identical or different for C¹ and C²,
f) n is 0-6,
**characterized in that**
• silicon particles enveloped completely or partially with a silicon dioxide layer are first of all treated in a non-oxidizing medium with a 5 percent strength by volume HF-H₂O/ethanol solution over a period of 10 minutes, and subsequently the liquid phase is removed by distillation from the resultant silicon particles freed from silicon dioxide, and
• reaction takes place with one or more compounds of the general formula CHR=CR-(CR₂)ₙ-X (III) or CH≡C-(CR₂)ₙ-X (IV).

2. Process according to Claim 1, **characterized in that** 0.3 ≤ HF/Si ≤ 1, in mol/mol.

3. Process according to Claim 2 or 3, **characterized in that** 1 ≤ [(III) or (IV)]/Si ≤ 10, in mol/mol.

4. Process according to Claims 1 to 3, **characterized in that** the reaction of the silicon particles freed from silicon dioxide with a compound of the general formula (III) or (IV) is carried out at temperatures from 140 to 200°C.

5. Process according to Claims 1 to 4, **characterized in that** the reaction of the silicon particles freed from silicon dioxide with a compound of the general formula (III) or (IV) is carried out in a solvent.

6. Process according to Claims 1 to 5, **characterized in that** the compound of the general formula (IV) is

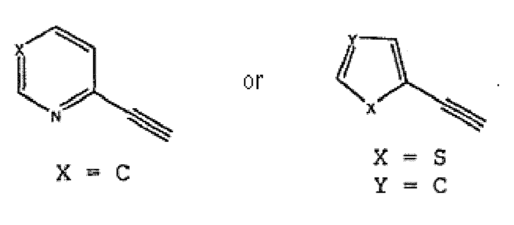

7. Dispersion comprising the silicon particles obtained according to Claims 1 to 6.

8. Use of the silicon particles obtained according to Claims 1 to 6 or of the dispersion according to Claim 7 in light-emitting diodes, in displays, in FET, as vehicle for the intracellular transport of active ingredients and as biomarker.

## Revendications

1. Procédé pour la préparation de particules de silicium à surface modifiée présentant un diamètre moyen des particules de 1 à 20 nm, sur lesquelles la modification de surface
a) enrobe complètement la surface des particules de silicium et
b) est constituée par une ou plusieurs parties de molécule, qui sont liées par covalence via une liaison Si-C, et qui présentent la structure
-C¹HR-C²HR-(CR²)ₙ-X (I)
ou
-C¹H=CH-(CR²)ₙ-X (II)
où
c) C¹ représente l'atome de carbone qui forme la liaison covalente Si-C,
d) X représente un résidu de molécule présentant un système délocalisé d'électrons π,
e) R représente un radical R lié à C¹ ou C², avec R = H, CH₃, C₂H₅, n-C₃H₇, i-C₃H₇, n-C₄H₉, i-C₄H₉, R pouvant être identique ou différent pour C¹ et C²,
f) n = 0-6,
**caractérisé en ce qu'**on
- traite d'abord, dans un milieu non oxydant, des particules de silicium partiellement ou complètement enrobées d'une couche de dioxyde de silicium avec une solution à 5% en volume de HF-H₂O/éthanol pendant un laps de temps de 10 minutes, puis on sépare par distillation la phase liquide des particules de silicium obtenues, libérées du dioxyde de silicium,
- transforme avec un ou plusieurs composés de formule générale CHR=CR-(CR₂)ₙ-X (III) ou CH=C-(CR₂)ₙ-x (IV).

2. Procédé selon la revendication 1, **caractérisé en ce que** 0,3 ≤ HF/Si ≤ 1, en moles/mole.

3. Procédé selon les revendications 2 ou 3, **caractérisé en ce que** 1 ≤ [(III) ou (IV)]/Si ≤ 10, en moles/mole.

4. Procédé selon les revendications 1 à 3, **caractérisé en ce qu'**on réalise la transformation des particules de silicium libérées du dioxyde de silicium avec un composé de formule générale (III) ou (IV) à des températures de 140 à 200°C.

5. Procédé selon les revendications 1 à 4, **caractérisé en ce qu'**on réalise la transformation des particules de silicium libérées du dioxyde de silicium avec un composé de formule générale (III) ou (IV) dans un solvant.

6. Procédé selon les revendications 1 à 5, **caractérisé en ce que** le composé de formule générale (IV) est 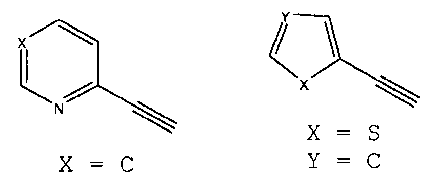 ou

7. Dispersion contenant les particules de silicium obtenues selon les revendications 1 à 6.

8. Utilisation des particules de silicium obtenues selon les revendications 1 à 6 ou de la dispersion selon la revendication 7 dans des LED, des affichages, des transistors à effet de champ, comme véhicule pour le transport intracellulaire de substances actives et comme biomarqueur.
